# EUROPEAN PATENT SPECIFICATION

(11) **EP 2 390 086 B1**
(45) Date of publication and mention of the grant of the patent: **01.04.2015**
(21) Application number: 11165820.9
(22) Date of filing: 12.05.2011
(51) Int. Cl.: B29C 65/30, B65B 31/04, B65B 51/14, B65B 57/00, H01F 27/40, B65B 65/00, H02K 17/30, H02K 11/00, H02K 19/34, H02K 19/36

(54) **A machine for sealing vacuum packs and a control method therefor**
Maschine zum Abdichten von Vakuumpacks und Steuerverfahren dafür
Machine pour sceller des emballages sous vide et procédé de contrôle correspondant

(30) Priority: 25.05.2010 IT RE20100042
(43) Date of publication of application: 30.11.2011
(73) Proprietor: Reber S.r.l., 42045 Luzzara (Reggio Emilia) (IT)
(72) Inventor: Re, Giorgio, 42045 Luzzara (Reggio Emilia) (IT); Catellani, Pier Diano, 42045 Luzzara (Reggio Emilia) (IT)
(74) Representative: Corradini, Corrado

(56) References cited:
- WO-A1-97/18504
- DE-A1- 1 638 429
- DE-A1- 3 246 595
- DE-B- 1 023 241
- DE-B- 1 225 889
- GB-A- 925 377
- GB-A- 2 196 804
- US-A- 4 941 310
- US-A- 5 821 659
- US-A- 6 058 998
- US-A1- 2007 068 120

## Description

### TECHNICAL FIELD

The invention relates to a machine for sealing vacuum packs and a corresponding control method.

### BACKGROUND ART

Machines for vacuum-packing of food products contained in bags of plastic bags and/or aluminium alloys are known, comprising a pump for aspirating air from inside the bag, activated by an electric motor, and a welding element provided with an electrical resistance.

The welding element is arranged at the edge of the bag, and is crossed by an electric current which by heating the electrical resistance causes the welding of the bag.

Bag-sealing machines under vacuum conditions can be classified, from the point of view of the supply system, in two categories, according to whether they are destined for an exclusively domestic use or for domestic and professional use.

A first category of machines, destined for an exclusively domestic use, comprises machines in which the electric motor and the welding element are supplied at low voltage by a single transformer connected to the general electric voltage supply.

In this category, the performance of the pump in terms of absolute vacuum created in the category is low as the functioning of the pump is slowed down during the welding operation, as part of the power of the supply transformer is absorbed by the welding element.

In order to enable the pump to function at full power even during the welding process, it would be necessary to use a motor and a transformer of large dimensions.

A second category of machines, destined for domestic and professional use, comprises machines for creating a depression in which the electricity grid supply voltage is used for directly supplying the electric motor of the aspiration pump and for supplying a transformer connected to the welding element.

In this case, the electric motor is directly supplied by the electrical supply and thus is not subject to the natural tension reduction that occurs during the welding operation, typical of the machines of the first described category.

In both cases, in order to have optimal welding results the bag has to receive a certain quantity of thermal energy (heat) through the welding element.

The heat energy produced by the welding element is equal to the electrical energy absorbed by the welding element multiplied by the time the electrical power is applied for.

The electrical energy absorbed by the welding element is, as is known, the same as the square of the electrical tension applied to the welding element divided by the value of the electrical resistance of the welding element.

In the above-described machines, the electrical power for effecting the welding is applied for a predefined constant time.

The functioning of the machines described above therefore depends on the tension dispensed by the electricity grid supply for supplying the welding element during the welding of the bags.

The electricity grid supply is however subject to oscillations (in general in Italy there are variations within a range of ± 10%) and as a consequence the electrical power absorbed by the welding element varies in accordance with the variations in the supplied tension. The consequences of the oscillations are reflected in the quality of the welding (there might be burns or incomplete weld seams) and in the wear on the welding elements, which also grow proportionally with the seasonal variations in temperature.

To cope with these oscillations in the supply network tension, in traditional systems it is preferred to set slightly longer welding times, or the welding operation is performed more than once, such as not to compromise the aspirating/welding cycle and thus not damage the product.

Alternatively, US patent US 4941310 describes a machine for vacuum-sealing bags which comprises a pump for aspirating air from the pack, a motor for activating the pump, a welding bar and a supply circuit for the welding bar which comprises a transformer. The supply circuit of this machine is controlled by an amperometric thermal cut-out switch, not described in its entirety herein, which seems to interrupt supply to the welding bar on reaching a predetermined temperature value, and therefore independently of the electrical energy effectively absorbed by the welding bar from the beginning of the welding operation.

This type of control therefore also has the drawback that the electrical energy supplied to the welding bar can be different from cycle to cycle, especially if these welding cycles are repeated in rapid succession, without giving sufficient time to the welding bar and/or the thermal cut-out switch to cool completely. Consequently, the welding actions performed with this machine can give different results, sometimes causing an insufficient sealing of the bag or, conversely, sometimes actually burning it.

### DISCLOSURE OF INVENTION

An aim of the present invention is to obviate the above-mentioned drawbacks of the prior art, with a solution that is simple, rational and relatively inexpensive.

In particular, the invention makes available a machine for sealing vacuum packs, typically bags made of a plastic material and/or aluminium alloys, which comprises:
a pump for aspirating the air from the inside of a pack containing the product to be placed under a depression;
at least an electric motor for actuating the pump, which motor is destined to be powered by an electrical supply;
at least a welding element destined to be placed in contact with the pack, for welding and sealing the pack;
a supply circuit destined to connect the welding element to the electrical supply; and
a control unit destined to control the supply circuit in order to provide electrical energy to the welding element.

In the present invention, the machine further comprises measuring means for measuring a value of a parameter that is indicative of the electrical energy which the supply circuit supplies to the welding element, which measuring means are connected to the control unit, which is configured such as to determine the value of the electrical energy supplied from the start of welding as a function of the measured parameter, and in order to stop supply of the electrical energy to the welding element on reaching a predetermined value of the electrical energy.

As the control unit interrupts the electrical supply to the welding element on reaching a predetermined electrical energy value, the functioning of the welding element is very stable and effective, and obviates the problem of any possible welding errors or damage to the pack, with a considerable saving in terms of electrical energy with respect to the known solutions.

In particular, it has been noted that with a supply tension of above 230V, the machine of the invention achieves the welding of the packs (bags) in a shorter time with respect to traditional machines, while with a supply tension of less than 230V the machine of the invention requires sealing times that are slightly longer but have overall energy consumption that is lower than with traditional machines.

A further advantage of this solution consists in the fact of being able to perform a series of welding cycles in rapid succession, thus always obtaining practically the same results, even when at the beginning of each welding cycle the welding element is still hot from the preceding cycle. Since the resistance of the welding element generally increases with the increase of its temperature, if the welding element is already hot, the tension applied to its ends is greater with respect to a case in which it is cold, and therefore the time required for reaching the predetermined energy level diminishes. In other words, if the welding element is already hot, the time of application of the welding automatically diminishes, enabling effective welding on all occasions while preventing any burning phenomena.

In a preferred aspect of the invention, the measuring means comprise a voltmeter.

In a further aspect, the supply circuit comprises a transformer destined to be supply by the electricity grid supply, and destined to transform the grid tension into a low-voltage tension for actuating the welding element.

In particular, the electric motor destined to activate the pump is preferably a dual-coil motor and comprises a first coil which functions as a stator coil of the electric motor and a second coil which is electrically insulated from the first coil and functions as a primary coil of the transformer of the supply circuit.

With this solution, and in synergy with the control system of the electrical energy supplied to the welding bar, multiple advantages are obtained.

In particular, with the energy control system a lower tension can be requested of the transformer with respect to the prior art, because the control will automatically increase the welding time so that the desired energy value is reached.

From this it follows that the second motor coil, with a dual coil (i.e. the primary coil of the transformer) can be realised using small-section wires, simply and with contained costs, weights and dimensions.

At the same time, the dual-coil motor enables a significant reduction in the machine's energy consumption (with respect to a case with a separate motor and transformer), as well as providing better cooling both of the motor and the transformer, thus increasing its overall working life.

In this way, a very compact and substantially less expensive machine is also obtained.

In a further aspect of the invention, the machine comprises a first switch arranged in series with the electric motor, which is controlled by the control unit for activating or deactivating the electric motor.

The machine can further comprise a second switch arranged in series with the welding element, which is controlled by the control unit for activating or deactivating the supply to the welding element.

Thanks to these switches, the control unit is effectively able to control the activation and deactivation of the welding element and the pump, independently of one another.

In a preferred embodiment of the invention the machine is provided with a sensor destined to measure the degree of depression generated by the pump internally of the pack, such as effectively to control the functioning thereof.

The invention further makes available a method for controlling the above-mentioned machine for sealing packages in a depression.

This method, in general terms, comprises operating steps of:
activating the pump for aspirating the air from inside a pack;
supplying electrical energy to the welding element via the supply circuit; and interrupting the functioning of the pump.

In particular, the method of the invention comprises further operating steps of:
establishing a desired value of the electrical energy to be supplied to the welding element during a welding operation;
measuring the value of an electrical parameter indicating the electrical energy supplied to the welding element, typically the electrical tension applied; calculating the value of the electrical energy effectively supplied to the welding element from the beginning of welding, as a function of the measured value of the above-mentioned electrical parameter; and
interrupting the electrical supply to the welding element, when the value of the electrical energy effectively supplied to the welding element reaches the desired value.

In this way, the supply time of the electrical energy to the welding element varies as a function of the effective value of the electrical energy supplied to the welding element, thus obtaining optimal welding with reduced energy consumption.

In a preferred embodiment of the invention, the control method comprises further steps of:
measuring the depression generated by the pump internally of the pack; and
supplying electrical energy to the welding element once the depression generated by the pump reaches a predetermined value.

In this way, the packing cycle of the products in the bags is effectively respected.

### BRIEF DESCRIPTION OF THE DRAWINGS

The present invention will now be described with reference to the accompanying figures of the drawings, which illustrate a non-limiting embodiment thereof, in which:
figure 1 is a schematic lateral view of a machine for sealing bags which are in a state of depression, realised according to the present invention;
figure 2 is a schematic view from above of the machine of figure 1;
figure 3 is the view of figure 2 in an alternative embodiment of the present invention.

### BEST MODE FOR CARRYING OUT THE INVENTION

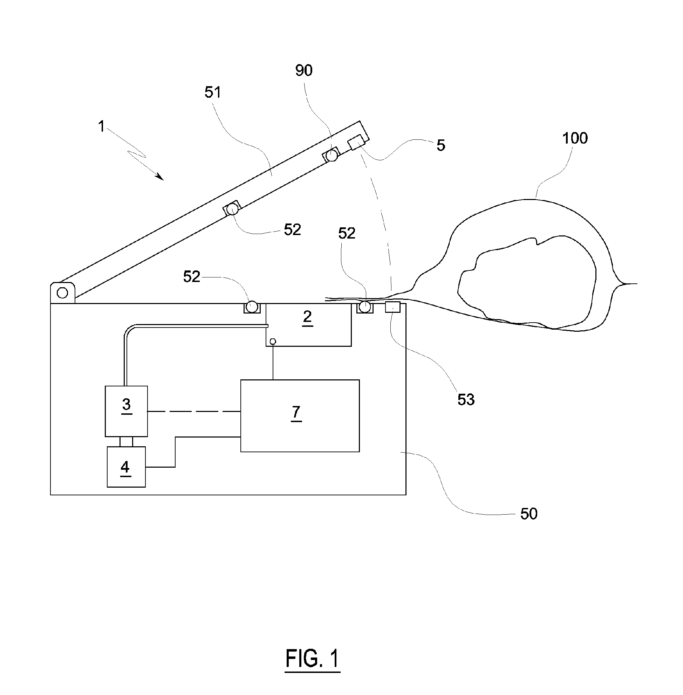

In figure 1, number 1 denotes in its entirety a machine for sealing bags under vacuum conditions. The machine 1 comprises a container 50 with a mobile cover 51. The container 50 internally contains, in proximity of an edge thereof, a channel 2 which is destined to receive an edge of a bag 100 made of a plastic material, which has previously been filled with a product to be vacuum-packed. The channel 2 is connected to a pump 3 for aspirating the air and creating a depression internally of the plastic bag 100. The pump 3 is connected to an electric motor 4 supplied by a socket 40 connected, in use, to the electric supply.

As can be understood from figure 1, in a closed position the cover 51 rests on the container 50, closing the channel 2.

The closure of the channel 2 is made hermetic by the use of special seals 52 located both in the cover 51 and in the container 50.

A welding element 5 is located at the end of the cover 51, which is arranged such that when the cover 51 is closed the bag 100 is crushed between the welding element 5 and an underlying abutting element 53 which is located at the end of the container 50.

In this way, the welding element 5 is designed to weld the two parts of the bag 100, sealing the contents.

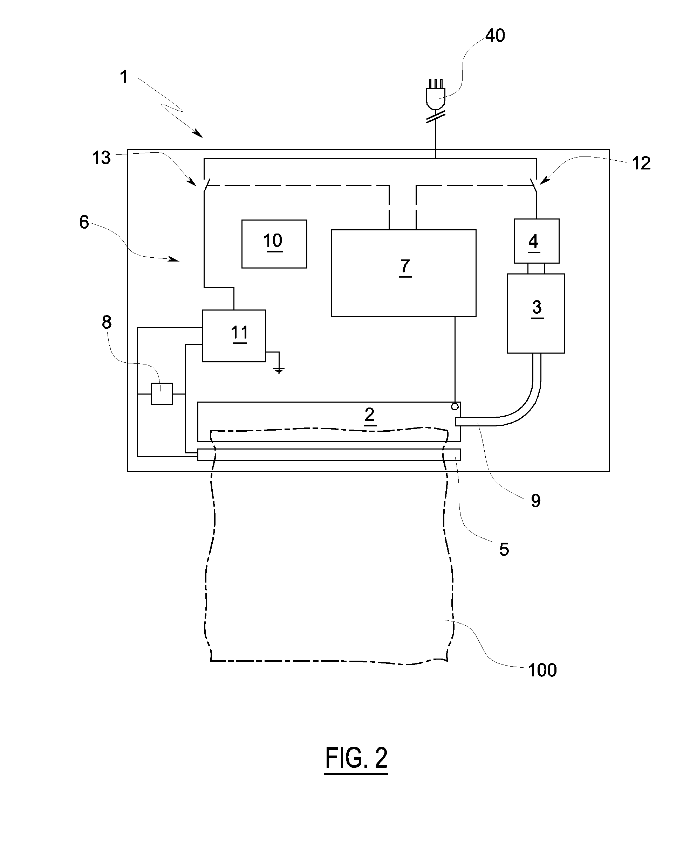

As illustrated in figure 2, a supply circuit 6, supplied by the electricity grid tension, supplies a transformer 11 connected to the welding element 5. The function of the transformer 11 is to transform the electricity grid tension into a low-voltage tension for the resistance of the welding element 5. A control unit 7 pilots the supply circuit 6 in order to supply electrical energy to the welding element 5 and for activating and deactivating the functioning of the pump 3 via the activation and deactivation of the electric motor 4.

Measuring means 8 are arranged in the supply circuit 6, a voltmeter in the illustrated embodiment, able to detect the electrical tension effectively applied to the welding element 5 for actuating it.

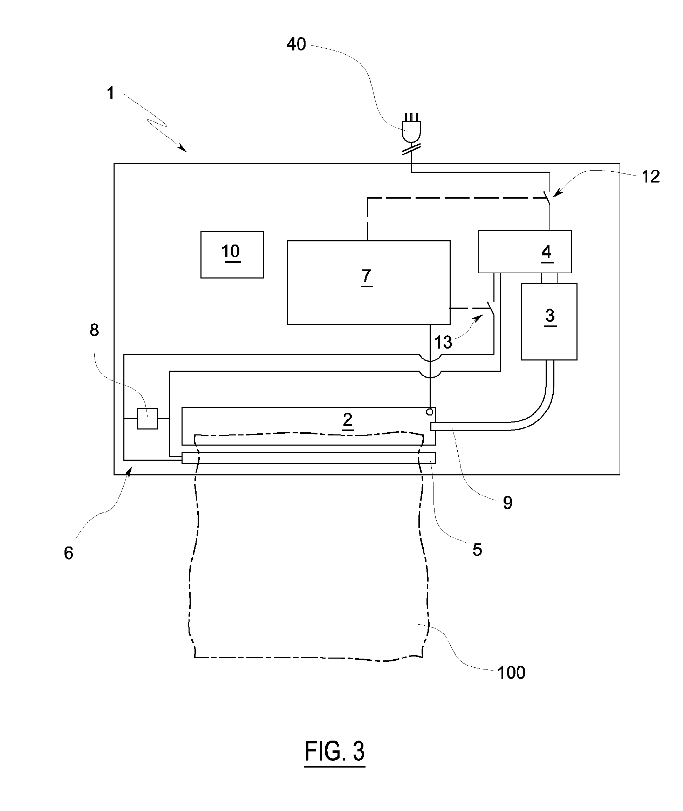

In a second embodiment, illustrated in figure 3, the electric motor 4 is a dual-coil motor with an auto-transformer. It comprises a first coil which constitutes the stator coil of the electric motor 4 and a second coil which constitutes the primary coil of the transformer 11 connected to the welding element 5. The two coils are electrically insulated from one another.

In both cases, the supply circuit 6 comprises a switch 12 arranged in series with the electric motor 4. It is controlled by the control unit 7 and is closed or opened to activate or deactivate the electric motor 4. A second switch 13 is arranged in the supply circuit 6, in series with the welding element 5, and is closed or opened by the control unit 7 in order to activate or deactivate the supply to the welding element 5.

Measuring means 9 can be present in the channel 2, for measuring the degree of depression applied by the pump, in the illustrated embodiment an adjustable vacuum switch. There can also be a light indicator 10 which is activated by the control unit 7 once the desired value has been reached internally of the bag 100.

In the illustrated embodiment, during the functioning stage of the machine 1 the plastic bag 100 (previously filled with the product to be packed) is placed in the channel 2 and the cover 51 is closed. The control unit 7 activates the functioning of the pump 3 by turning off the switch 12, which leads to the actuation of the electric motor 4. The pump 3 starts aspirating air from the bag 100. If the depression measuring means 9 are present, the value of the depression created in the bag 100 is measured and transmitted to the control unit 7, which, once the predefined depression value has been reached, proceeds to activating the welding element 5 by switching off the switch 13. In this way the stage of welding the bag commences.

The turning-off of the switch 13 enables the heads of the welding element 5 to be supplied with the electricity grid supply.

In general, in order to have an optimal welding the welding element 5 must generate and transfer to the plastic bag 100 a sufficient heat energy to produce the welding of the bag 100 itself, without causing any burning; the sufficient heat energy could be, for example, 7 Joules.

The heat energy is equal to the electrical energy supplied to the welding element 5, i.e. equal to the absorbed electrical power of the welding element 5 multiplied by the time of application of the electrical power, from the start of the welding stage up to the end thereof.

The absorbed electrical power of the welding element 5 is the square of the electrical tension applied to the welding element 5, divided by the value of the electrical resistance of the welding element 5.

The fluctuations of the electricity grid supply tension (in Italy these oscillations are in the range of ± 10%) create uncertainty in relation to the effective value of the tension applied to the welding element 5. Consequently, in order to reduce the uncertainty of the value of the tension effectively applied and thus on the energy absorbed after a determined time, the control unit 7 of the present invention measures, via the measuring means 8, the effectively-applied tension to the welding element 5. The measured value of the tension is used by the control unit 7 to estimate the electrical power absorbed by the welding element 5 from the start of the welding operation, and the electrical energy effectively used for the welding, and to stop the welding once a predetermined amount of electrical energy has been used, such as to guarantee optimal welding.

The present invention has the advantage of optimising the welding process by annulling the negative effect of the fluctuation of the electricity grid tension thanks to a measurement of the effective value of the applied tension and a regulation of the welding time as a function of the effective value of the tension applied to the welding element 5.

Further, if a stage of welding begins when the welding element 5 is already hot, for example by effect of a preceding welding operation, the control unit 7 has the advantage of automatically reducing the application time of the welding.

The electrical resistance of the welding element 5 normally varies spontaneously as a function of its temperature, increasing as the temperature increases.

In a case in which the welding element 5 is already hot, the tension applied to its ends will always be greater with respect to a case in which it is initially cold; it follows that the time required for supplying the welding element 5 with the predetermined value of the electrical energy will be automatically reduced.

With the automatic reduction of the supply time to the welding element 5, the control unit 7 constantly guarantees optimal heating of the bag, thus also optimising the welding and reducing the possibility of causing burns.

It has in particular been observed that thanks to this control system up to 130 welding operations can be performed in rapid succession.

The quantity of electrical energy supplied to the welding element 5 can be programmed and adapted to the use of bags 100 of plastic material having larger or smaller thicknesses.

Further, the life of the resistance of the welding element 5, especially when the grid tension assumes higher values than the rated one, is increased as the invention is based on the concept of constant energy and automatically reduces the welding time.

The embodiment with the dual-coil electric motor 4 further enables the transformer 11 to be integrated with the electric motor 4, thus reducing the size and overall cost of the machine.

Thanks to the use of the dual-coil electric motor 4, the electric consumption is reduced by at least 30% and the efficiency and the average working life of the electric motor 4 of the pump 3 are also increased.

The electric motor 4 with a dual coil considerably increases the power factor(oos ϕ) of the system, and reduces the electrical consumption of the machine (with respect to a case of a separate motor and transformer), as well as obtaining a better cooling of both the motor and the transformer, and thus increasing the overall duration.

In addition, the functioning of the control unit 7 is such that a tension can be requested of the transformer which is much lower than in the prior art, as the control unit 7 will in any case increase the welding time in order to reach the desired energy value.

It follows that the second coil of the dual-coil electric motor 4 (i.e. the primary coil of the transformer) can be made with small-section wires, and thus is simple and has contained costs, weights and dimensions.

Obviously a technical expert in the sector might make numerous modifications of a technical-applicational nature to the machine 1 and the relative control method, without their forsaking the ambit of protection of the invention as it is claimed herein below.

## Claims

1. A machine (1) for sealing vacuum packs (100), comprising:
a pump (3) for aspirating air from inside a pack (100);
at least an electric motor (4) for actuating the pump (3), which electric motor (4) is destined to be powered by an electricity grid supply;
at least a welding element (5) destined to be placed in contact with the pack (100), for welding and sealing the pack (100);
a supply circuit (6) destined to connect the welding element (5) to the electricity grid supply; and
a control unit (7) destined to control the supply circuit (6) in order to supply electrical energy to the welding element (5);
**characterised in that** it comprises measuring means (8) for measuring a value of a parameter indicating the electrical energy that the supply circuit (6) supplies to the welding element (5), which measuring means (8) are connected to the control unit (7), which control unit (7) is configured such as to determine the value of the electrical energy supplied to the welding element (5) from the start of
a welding operation according to the measured parameter, and in order to interrupt supply of the electrical energy to the welding element (5) on reaching a predetermined value of the electrical energy.

2. The machine of claim 1, wherein the measuring means comprise a voltmeter.

3. The machine of one of claims from 1 to 2, wherein the supply circuit (6) comprises a transformer (11) destined to be supplied by the electricity grid supply, and destined to transform the electricity grid supply tension into a low-voltage tension in order to supply the welding element (5).

4. The machine of claim 3, wherein the electric motor (4) of the pump (3) comprises at least two coils, of which a first coil functions as a stator coil of the electric motor (4), and a second coil, electrically insulated from the first coil, functions as a primary coil of the transformer of the supply circuit (6).

5. The machine of one of claims from 1 to 4, comprising a first switch (12) arranged in series with the electric motor (4), which is controlled by the control unit (7) in order to activate or deactivate the electric motor (4).

6. The machine of one of claims from 1 to 5, comprising a second switch (13) arranged in series with the welding element (5), which is controlled by the control unit (7) in order to activate or deactivate the supply to the welding element (5).

7. The machine of one of claims from 1 to 6, comprising a sensor (9) destined to measure a degree of depression generated by the pump (3) internally of the pack (100).

8. A control method of the machine of one of claims from 1 to 7, comprising operating stages of:
activating the pump (3) for aspirating air from inside a pack (100);
supplying electrical energy to the welding element (5) via the supply circuit (6); and
interrupting the functioning of the pump;
**characterised in that** it comprises further stages of:
establishing a desired value of the electrical energy to be supplied to the welding element (5) during a welding operation;
measuring a value of an electrical parameter indicating the electrical energy supplied to the welding element (5);
calculating a value of the electrical energy effectively supplied to the welding element (5) from the start of the welding operation, as a function of the measured value of the electrical parameter; and
interrupting the electrical supply to the welding element (5), when the value of the electrical energy effectively supplied to the welding element (5) reaches the desired value.

9. The control method of claim 8, comprising further stages of:
measuring a depression generated by the pump (3) internally of the pack (100); and
supplying electrical energy to the welding element (5) once the depression generated by the pump (3) reaches a predetermined value.

## Patentansprüche

1. Maschine zum Versiegeln von Vakuumverpackungen (100), Folgendes umfassend:
eine Pumpe (3) zum Absaugen von Luft aus dem Inneren einer Packung (100),
mindestens einen Elektromotor (4) zum Betätigen der Pumpe (3), wobei der Elektromotor (4) dafür vorgesehen ist, von einem Stromversorgungsnetz mit Leistung versorgt zu werden,
mindestens ein Schweißelement (5), das dafür vorgesehen ist, in Kontakt mit der Packung (100) angeordnet zu werden, um die Packung (100) zu verschweißen und zu versiegeln,
eine Versorgungsschaltung (6), die dafür vorgesehen ist, das Schweißelement (5) an das Stromversorgungsnetz anzuschließen, und
eine Steuereinheit (7), die dafür vorgesehen ist, die Versorgungsschaltung (6) zu steuern, um das Schweißelement (5) mit Elektroenergie zu versorgen,
**dadurch gekennzeichnet, dass** die Maschine Messmittel (8) zum Messen eines Parameterwertes umfasst, der die Elektroenergie angibt, mit der die Versorgungsschaltung das Schweißelement (5) versorgt, wobei die Messmittel (8) an die Steuereinheit (7) angeschlossen sind, wobei die Steuereinheit (7) derart gestaltet ist, dass sie den Wert der Elektroenergie, mit der das Schweißelement (5) versorgt wird, vom Beginn des Schweißvorgangs an gemäß dem gemessenen Parameter bestimmt, und die Versorgung des Schweißelements (5) mit Elektroenergie beim Erreichen eines festgelegten Wertes der Elektroenergie unterbricht.

2. Maschine nach Anspruch 1, wobei die Messmittel einen Spannungsmesser umfassen.

3. Maschine nach einem der Ansprüche 1 bis 2, wobei die Versorgungsschaltung (6) einen Transformator (11) umfasst, der dafür vorgesehen ist, vom Stromversorgungsnetz versorgt zu werden, und dafür, die Spannung des Stromversorgungsnetzes in eine Niedervoltspannung umzuwandeln, um das Schweißelement (5) zu versorgen.

4. Maschine nach Anspruch 3, wobei der Elektromotor (4) der Pumpe (3) mindestens zwei Spulen umfasst, von denen eine erste Spule als Statorspule des Elektromotors (4) und eine zweite Spule, die von der ersten Spule elektrisch isoliert ist, als Primärspule des Transformators der Versorgungsschaltung (6) dient.

5. Maschine nach einem der Ansprüche 1 bis 4, einen ersten Schalter (12) umfassend, der in Reihe mit dem Elektromotor (4) angeordnet ist und der von der Steuereinheit (7) gesteuert wird, um den Elektromotor (4) zu aktivieren oder zu deaktivieren.

6. Maschine nach einem der Ansprüche 1 bis 5, einen zweiten Schalter (13) umfassend, der in Reihe mit dem Schweißelement (5) angeordnet ist und von der Steuereinheit (7) gesteuert wird, um die Versorgung des Schweißelements (5) zu aktivieren oder zu deaktivieren.

7. Maschine nach einem der Ansprüche 1 bis 6, einen Sensor (9) umfassend, der dafür vorgesehen ist, einen von der Pumpe (3) im Inneren der Packung (100) erzeugten Grad des Unterdrucks zu messen.

8. Steuerungsverfahren der Maschine nach einem der Ansprüche 1 bis 7, folgende Arbeitsschritte umfassend:
Aktivieren der Pumpe (3) zum Absaugen von Luft aus dem Inneren einer Packung (100),
Versorgen des Schweißelements (5) mit Elektroenergie über die Versorgungsschaltung (6) und
Unterbrechen der Funktion der Pumpe,
**dadurch gekennzeichnet, dass** es ferner folgende Schritte umfasst:
Feststellen eines gewünschten Wertes der Elektroenergie, mit der das Schweißelement (5) während eines Schweißvorganges versorgt werden soll,
Messen eines elektrischen Parameterwertes, der die Elektroenergie angibt, mit der das Schweißelement (5) versorgt werden soll,
Berechnen eines Wertes der Elektroenergie, mit der das Schweißelement (5) vom Beginn des Schweißvorgangs an effektiv versorgt wurde, als Funktion des gemessenen elektrischen Parameterwertes und
Unterbrechen der Energieversorgung des Schweißelements (5), wenn der Wert der Elektroenergie, mit der das Schweißelement (5) effektiv versorgt wurde, den gewünschten Wert erreicht.

9. Steuerverfahren nach Anspruch 8, ferner folgende Schritte umfassend:
Messen eines von der Pumpe (3) im Inneren der Packung (100) erzeugten Unterdrucks und
Versorgen des Schweißelements (5) mit Elektroenergie, sobald der von der Pumpe (3) erzeugte Unterdruck einen festgelegten Wert erreicht.

## Revendications

1. Machine (1) pour sceller des emballages sous vide (100), comprenant :
une pompe (3) pour aspirer l'air présent à l'intérieur d'un emballage (100);
au moins un moteur électrique (4) pour actionner la pompe (3), ledit moteur électrique (4) étant destiné à être alimenté par un réseau électrique ;
au moins un élément de soudage (5) destiné à être placé en contact avec l'emballage (100) pour souder et sceller l'emballage (100) ;
un circuit d'alimentation (6) destiné à connecter l'élément de soudage (5) au réseau électrique ; et
une unité de commande (7) destinée à commander le circuit d'alimentation (6) afin d'alimenter l'énergie électrique à l'élément de soudage (5) ;
**caractérisée en ce qu'**elle comprend un moyen de mesure (8) pour mesurer une valeur d'un paramètre qui indique l'énergie électrique que le circuit d'alimentation (6) fournit à l'élément de soudage (5), ledit moyen de mesure (8) étant connecté à l'unité de commande (7), ladite unité de commande (7) étant configurée de manière à déterminer la valeur de l'énergie électrique fournie à l'élément de soudage (5) depuis le début d'une opération de soudage en fonction du paramètre mesuré, et de manière à interrompre l'alimentation d'énergie électrique à l'élément de soudage (5) lorsqu'une valeur prédéterminée d'énergie électrique est atteinte.

2. Machine selon la revendication 1, dans laquelle le moyen de mesure comprend un voltmètre.

3. Machine selon l'une des revendications 1 et 2, dans laquelle le circuit d'alimentation (6) comprend un transformateur (11) destiné à être alimenté par le réseau électrique, et destiné à transformer la tension du réseau électrique en une basse tension de manière à alimenter l'élément de soudage (5).

4. Machine selon la revendication 3, dans laquelle le moteur électrique (4) de la pompe (3) comprend au moins deux enroulements, dont un premier enroulement fonctionne comme un enroulement de stator du moteur électrique (4), et un deuxième enroulement, isolé électriquement du premier enroulement, fonctionne comme un enroulement primaire du transformateur du circuit d'alimentation (6).

5. Machine selon l'une des revendications 1 à 4, comprenant un premier interrupteur (12) agencé en série avec le moteur électrique (4), qui est commandé par l'unité de commande (7) de manière à activer ou désactiver le moteur électrique (4).

6. Machine selon l'une des revendications 1 à 5, comprenant un deuxième interrupteur (13) agencé en série avec l'élément de soudage (5), qui est commandé par l'unité de commande (7) de manière à activer ou désactiver l'alimentation de l'élément de soudage (5).

7. Machine selon l'une des revendications 1 à 6, comprenant un capteur (9) destiné à mesurer un niveau de dépression générée par la pompe (3) à l'intérieur de l'emballage (100).

8. Procédé de commande de la machine selon l'une des revendications 1 à 7, comprenant les étapes opérationnelles suivantes :
activation de la pompe (3) pour aspirer l'air présent à l'intérieur d'un emballage (100) ;
alimentation d'énergie électrique à l'élément de soudage (5) via le circuit d'alimentation (6) ; et
interruption du fonctionnement de la pompe ;
**caractérisé en ce qu'**il comprend les étapes additionnelles suivantes :
établissement d'une valeur désirée d'énergie électrique à alimenter à l'élément de soudage (5) durant une opération de soudage ;
mesure de la valeur d'un paramètre électrique indiquant l'énergie électrique alimentée à l'élément de soudage (5) ;
calcul d'une valeur de l'énergie électrique effectivement alimentée à l'élément de soudage (5) depuis le début de l'opération de soudage, sous forme d'une fonction de la valeur mesurée du paramètre électrique ; et
interruption de l'alimentation électrique de l'élément de soudage (5) quand la valeur de l'énergie électrique effectivement fournie à l'élément de soudage (5) atteint la valeur désirée.

9. Procédé de commande selon la revendication 8, comprenant en outre les étapes suivantes :
mesure d'une dépression générée par la pompe (3) à l'intérieur de l'emballage (100) ; et
alimentation d'énergie électrique à l'élément de soudage (5) une fois que la dépression générée par la pompe (3) atteint une valeur prédéterminée.
